# EUROPEAN PATENT APPLICATION

(11) **EP 4 576 287 A1**
(43) Date of publication of application: **25.06.2025**
(21) Application number: 23854763.2
(22) Date of filing: 19.07.2023
(51) Int. Cl.: H01M 8/18, H01M 8/02

(54) **REDOX FLOW BATTERY SYSTEM**

(30) Priority: 16.08.2022 JP 2022129609
(71) Applicant: SUMITOMO ELECTRIC INDUSTRIES, LTD., Osaka-shi, Osaka 541-0041 (JP)
(72) Inventor: FUJITA, Hayato, Osaka-shi, Osaka 541-0041 (JP); TATSUMI, Ryouta, Osaka-shi, Osaka 541-0041 (JP); HANAFUSA, Kei, Osaka-shi, Osaka 541-0041 (JP); DONG, Yongrong, Osaka-shi, Osaka 541-0041 (JP)
(74) Representative: Müller-Boré & Partner Patentanwälte PartG mbB
(86) International application number: PCT/JP2023/026376
(87) International publication number: WO 2024/038726

(57) **Abstract**

A redox-flow battery system comprising a battery cell, a positive electrolyte, and a negative electrolyte, wherein during operation, a kinematic viscosity P1 of the positive electrolyte is different from a kinematic viscosity P2 of the negative electrolyte.

## Description

### TECHNICAL FIELD

The present disclosure relates to a redox-flow battery system. The present application claims the benefit of priority to Japanese Patent Application No. 2022-129609 filed on August 16, 2022, the entire contents of which are incorporated herein by reference.

### BACKGROUND ART

As a large-capacity rechargeable battery, redox-flow battery systems are known. In a redox-flow battery system, charging and discharging take place through circulation of a positive electrolyte and a negative electrolyte within a battery cell. Hereinafter, a redox-flow battery system may be also expressed as an RF battery system.

PTL 1 discloses a vanadium-based RF battery. PTL 2 discloses a manganese-titanium-based RF battery. Also, iron-chromium-based RF batteries and the like are known. In a vanadium-based RF battery, both the positive electrode active material and the negative electrode active material are vanadium (V) ions. In a manganese-titanium-based RF battery, the positive electrode active material is manganese (Mn) ions and the negative electrode active material is titanium (Ti) ions. In an iron-chromium-based RF battery, the positive electrode active material is iron (Fe) ions and the negative electrode active material is chromium (Cr) ions. In the below description, "electrolyte" collectively refers to a positive electrolyte and a negative electrolyte.

### CITATION LIST

### PATENT LITERATURE

PTL 1: Japanese Patent Laying-Open No. 2003-303611
PTL 2: International Patent Laying-Open No. WO 2011/111254

### SUMMARY OF INVENTION

A redox-flow battery system according to the present disclosure comprises:
a battery cell;
a positive electrolyte; and
a negative electrolyte, wherein
during operation, a kinematic viscosity P1 of the positive electrolyte is different from a kinematic viscosity P2 of the negative electrolyte.

### BRIEF DESCRIPTION OF DRAWINGS

Fig. 1 is a diagram illustrating the operation principle of a redox-flow battery system according to an embodiment.
Fig. 2 is a schematic diagram illustrating a partial configuration of a redox-flow battery system according to Embodiment 1.

### DETAILED DESCRIPTION

### [Problem to be Solved by the Present Disclosure]

During operation of a redox-flow battery system, a pressure difference may occur between the positive electrolyte and the negative electrolyte. For example, the pressure difference may occur due to a change in the state of charge (SOC) of the electrolyte. Moreover, during operation of a redox-flow battery system, fibers that constitute an electrode can pierce the membrane to form pinholes in the membrane. At this time, if the above-mentioned pressure difference is present, one of the positive electrolyte and the negative electrolyte may diffuse through the pinholes to reach the other electrolyte. As a result of this electrolyte diffusion, the positive electrolyte and the negative electrolyte are mixed with each other, and, thereby, battery performance is degraded.

An object of the present disclosure is to provide a redox-flow battery system which is capable of reducing electrolyte diffusion that can occur due to a pressure difference between a positive electrolyte and a negative electrolyte within a battery cell.

### [Advantageous Effect of the Present Disclosure]

A redox-flow battery system according to the present disclosure is capable of reducing electrolyte diffusion that can occur due to a pressure difference between a positive electrolyte and a negative electrolyte.

### [Description of Embodiments]

In the following, a description will be given of aspects of a redox-flow battery system according to the present disclosure.
<1> A redox-flow battery system according to an embodiment comprises:
   a battery cell;
   a positive electrolyte; and
   a negative electrolyte, wherein
   during operation, a kinematic viscosity P1 of the positive electrolyte is different from a kinematic viscosity P2 of the negative electrolyte.
   In the case where there is a difference between the kinematic viscosity P1 of the positive electrolyte and the kinematic viscosity P2 of the negative electrolyte, at the time when the positive electrolyte comes into contact with the negative electrolyte, due to the surface tension of the electrolytes at the contact interface, the rate of diffusion of the electrolytes tends to be reduced. As a result, in the redox-flow battery system according to an embodiment, even when pinholes are formed in the membrane and the electrolyte passes through the pinholes, diffusion of the electrolyte is reduced. As a consequence of the reduced diffusion of the electrolyte, the rate at which the positive electrolyte and the negative electrolyte are mixed with each other in the battery cell is reduced.
<2> In the redox-flow battery system according to <1> above,
   a ratio P1/P2 of the kinematic viscosity P1 to the kinematic viscosity P2 may be from 0.70 to 0.97, or from 1.05 to 1.30.

As the kinematic viscosity of the electrolyte increases, the pressure of the electrolyte tends to increase. When the pressure difference between the positive electrolyte and the negative electrolyte within the battery cell is too large, there is a possibility that a load can be applied on the membrane by the high-pressure electrolyte to damage the membrane. In addition, the high-pressure electrolyte can crush the electrode in which the low-pressure electrolyte is flowing. This can reduce flowability of the electrolyte in the crushed electrode. As specified in <2> above, when the ratio P1/P2 falls within the above-mentioned range, the pressure difference between the pressure of the positive electrolyte and the pressure of the negative electrolyte within the battery cell does not become too large. As a result, problems that can be caused by an excessive pressure difference tend not to occur.

When the ratio P1/P2 is close to 1, namely, when the difference between the kinematic viscosity P1 and the kinematic viscosity P2 is very small, diffusion at the contact interface between the positive electrolyte and the negative electrolyte tends to occur. As a result, when there are pinholes in the membrane, the positive electrolyte and the negative electrolyte with a ratio P1/P2 close to 1 tend to pass through the pinholes and become mixed with each other. On the other hand, the positive electrolyte and the negative electrolyte with a ratio P1/P2 being 0.97 or less or 1.05 or more tend not to pass through the pinholes and thereby not to become mixed with each other.

<3> In the redox-flow battery system according to <1> or <2> above,
the kinematic viscosity P1 may be from 0.70×10⁻² cm²/s to 20×10⁻² cm²/s, and
the kinematic viscosity P2 may be from 0.75×10⁻² cm²/s to 19×10⁻² cm²/s.

The kinematic viscosity of the electrolyte changes depending on the concentration of the active material included in the electrolyte. A positive electrolyte with a kinematic viscosity P1 of 0.70×10⁻² cm²/s or more includes a sufficient amount of positive electrode active material. A negative electrolyte with a kinematic viscosity P2 of 0.75×10⁻² cm²/s or more includes a sufficient amount of negative electrode active material. A redox-flow battery system comprising a positive electrolyte and a negative electrolyte of this type has a sufficient level of discharged capacity.

When the kinematic viscosity P1 is 20×10⁻² cm²/s or less, pressure loss at the time of circulation of the positive electrolyte does not rise too high. When the kinematic viscosity P2 is 19×10⁻² cm²/s or less, pressure loss at the time of circulation of the negative electrolyte does not rise too high.

<4> In the redox-flow battery system according to any one of <1> to <3> above, a positive electrode active material included in the positive electrolyte and a negative electrode active material included in the negative electrolyte may be vanadium ions.

In the configuration according to <4> above, the type of metal ions in the positive electrolyte is the same as the type of metal ions in the negative electrolyte. This configuration has the following effects, for example. (1) This configuration can prevent the movement of metal ions across the membrane of the battery cell to reach the counter electrode to cause a relative decrease of metal ions available for reactions at the electrodes. (2) When the electrolyte moves during charging and discharging and, thereby, the amount of electrolyte and the concentration of ions become different between the two electrodes, the configuration allows for mixing of the electrolyte to occur between the two electrodes to easily eliminate the differences. The above-mentioned electrolyte movement refers to a phenomenon where the electrolyte moves from one electrode to the other electrode over time across the membrane. (3) The configuration allows for simultaneously producing both the positive electrolyte and the negative electrolyte.

<5> In the redox-flow battery system according to <4> above,
a concentration of the vanadium ions in each of the positive electrolyte and the negative electrolyte may be from 1.0 mol/liter to 3.0 mol/liter.

When the concentration of vanadium ions in the positive electrolyte is equal to or more than the lower limit of the above-mentioned range, the positive electrolyte includes a sufficient amount of positive electrode active material. When the concentration of vanadium ions in the negative electrolyte is equal to or more than the lower limit of the above-mentioned range, the negative electrolyte includes a sufficient amount of negative electrode active material. Accordingly, the redox-flow battery system according to <5> above is capable of ensuring a high discharged capacity.

<6> In the redox-flow battery system according to any one of <1> to <5> above,
each of the positive electrolyte and the negative electrolyte may be an aqueous sulfuric acid solution, and
the aqueous sulfuric acid solution may have a concentration of sulfuric acid from 1.0 mol/liter to 6.0 mol/liter.

When the electrolyte includes sulfuric acid, the concentration of hydrogen ions in the electrolyte is high. Hydrogen ions permeate through the membrane of the battery cell to play a part in battery reactions. However, as the concentration of sulfuric acid in the electrolyte increases, the kinematic viscosity of the electrolyte increases. The positive electrolyte and the negative electrolyte both including sulfuric acid within the above-mentioned concentration range tend to satisfy the range of the ratio P1/P2 according to <2> above.

### [Detailed Description of Embodiment]

In the following, a description will be given of specific examples of the redox-flow battery system according to the present disclosure, with reference to drawings. In the embodiment, a redox-flow battery is expressed as an RF battery system. In the drawings, the same parts or equivalent parts are given the same reference numeral. The size of each component in the drawings is given for explanation purposes, and may not agree with the actual dimensions. Moreover, it is intended that the scope of the present disclosure is defined by claims, not by the examples given below, and encompasses all modifications and variations equivalent in meaning and scope to the claims.

### <Embodiment 1>

### <<Outline of RF Battery System>>

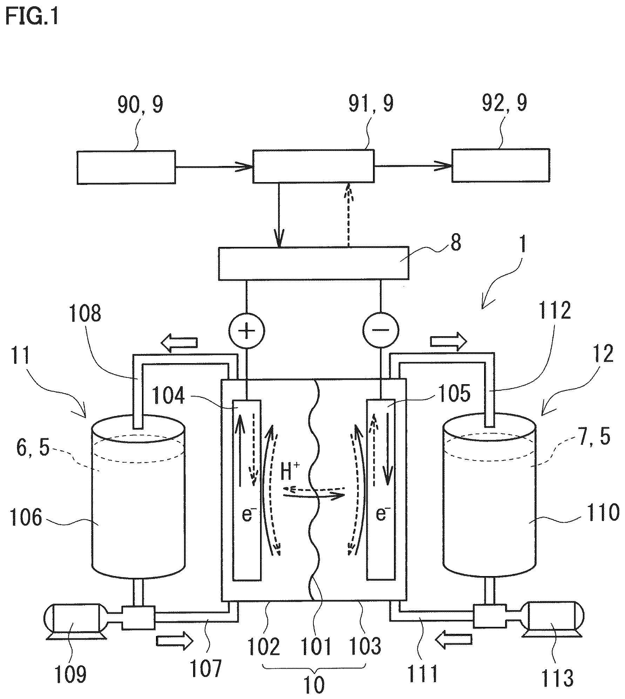

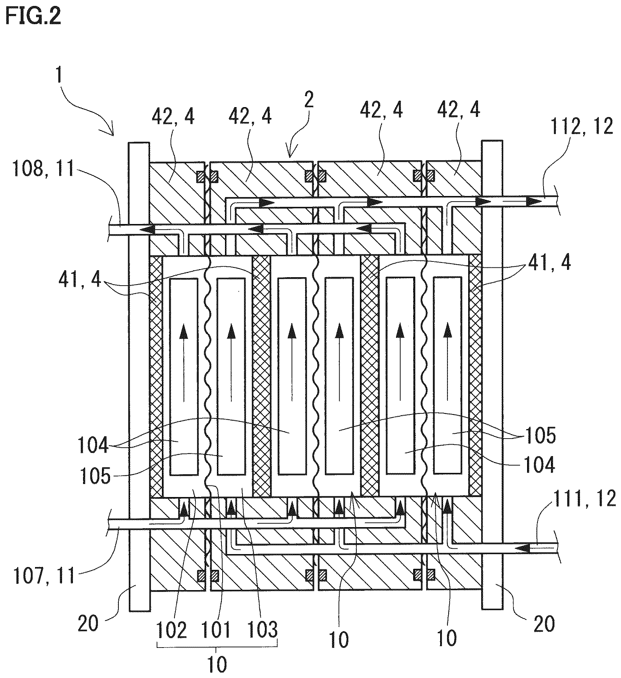

Referring to Fig. 1 and Fig. 2, a description will be given of an RF battery system 1 according to Embodiment 1. RF battery system 1 is an electrolytecirculation-type rechargeable battery. In RF battery system 1 illustrated in Fig. 1, charging and discharging take place through changes of valences of a positive electrode active material included in a positive electrolyte 6 and a negative electrode active material included in a negative electrolyte 7. Typically, the positive electrode active material and the negative electrode active material are metal ions the valence of which changes along with oxidation and reduction. In Fig. 1, the solid arrows mean charging, and the broken arrows mean discharging.

As illustrated in Fig. 1, RF battery system 1 is connected to a power system 9 via a power converter 8. In Fig. 1, power converter 8 is connected to a transformer facility 91 of the power system. Power converter 8 is an AC/DC converter, a DC/DC converter, or the like. RF battery system 1 is charged with electric power that is generated in an electric power generating unit 90, and discharges the electric power thus charged to a load 92. For example, electric power generating unit 90 is an electric power generation facility or otherwise an ordinary power plant that uses natural energy to perform photovoltaic power generation, wind power generation, and/or the like. RF battery system 1 is used for load leveling, instantaneous voltage drop compensation, emergency power source, and output smoothing in natural energy power generation, for example.

### <<Structure of RF Battery System>>

RF battery system 1 comprises a battery cell 10, a first circulation mechanism 11, and a second circulation mechanism 12. Battery cell 10 performs charging and discharging. First circulation mechanism 11 circulates positive electrolyte 6. Second circulation mechanism 12 circulates negative electrolyte 7.

Battery cell 10 is divided by a membrane 101 into a positive electrode cell 102 and a negative electrode cell 103. Membrane 101 is an ion-exchange membrane that does not allow permeation of electrons across itself but allows permeation of, for example, hydrogen ions (H⁺ ions). By hydrogen ions, electric charges are exchanged between positive electrode cell 102 and negative electrode cell 103. Positive electrode cell 102 internally includes a positive electrode 104. Negative electrode cell 103 internally includes a negative electrode 105. To positive electrode cell 102, the positive electrolyte is supplied by first circulation mechanism 11. To negative electrode cell 103, the negative electrolyte is supplied by second circulation mechanism 12. Each of positive electrode 104 and negative electrode 105 is an electricallyconductive porous body. The porous body includes one or more types of elements selected from the group consisting of carbon, titanium, and tungsten, for example.

As illustrated in Fig. 1 and Fig. 2, first circulation mechanism 11 comprises a tank 106, a first pipe 107, a second pipe 108, and a pump 109. In tank 106, positive electrolyte 6 including a positive electrode active material is stored. First pipe 107 is a channel for positive electrolyte 6 flowing from tank 106 toward battery cell 10. Second pipe 108 is a channel for positive electrolyte 6 flowing from battery cell 10 toward tank 106. Pump 109 is provided at some midpoint on first pipe 107. By the action of pump 109, positive electrolyte 6 is supplied from tank 106 through first pipe 107 to positive electrode cell 102. After discharged from positive electrode cell 102, positive electrolyte 6 flows through second pipe 108 back to tank 106.

Second circulation mechanism 12 comprises a tank 110, a first pipe 111, a second pipe 112, and a pump 113. In tank 110, negative electrolyte 7 including a negative electrode active material is stored. First pipe 111 is a channel for negative electrolyte 7 flowing from tank 110 toward battery cell 10. Second pipe 112 is a channel for negative electrolyte 7 flowing from battery cell 10 toward tank 110. Pump 113 is provided at some midpoint on first pipe 111. By the action of pump 113, negative electrolyte 7 is supplied from tank 110 through first pipe 111 to negative electrode cell 103. After discharged from negative electrode cell 103, negative electrolyte 7 flows through second pipe 112 back to tank 110.

As illustrated in Fig. 2, RF battery system 1 usually comprises a cell stack 2 formed of a plurality of battery cells 10 stacked together. Cell stack 2 comprises a stacked body that is formed by repeatedly stacking a cell frame 4, positive electrode 104, membrane 101, and negative electrode 105 in this order. At both ends of the stacked body in the stacking direction, supply/drainage plates 20 are provided. To each supply/drainage plate 20, first pipe 107 and second pipe 108 of first circulation mechanism 11, or first pipe 111 and second pipe 112 of second circulation mechanism 12, are connected. The number of battery cells 10 stacked in cell stack 2 can be selected as appropriate.

As illustrated in Fig. 2, cell frame 4 comprises a bipolar plate 41 and frame members 42. On one side of bipolar plate 41, positive electrode 104 is placed facing thereto. On the other side of bipolar plate 41, negative electrode 105 is placed facing thereto. Frame members 42 support the outer edges of bipolar plate 41. On the internal side of frame members 42, positive electrode 104 and negative electrode 105 are accommodated sandwiching the bipolar plate 41. Positive electrode 104 and negative electrode 105 sandwiching the membrane 101 are placed between bipolar plates 41 of two adjacent cell frames 4, to form a single battery cell 10.

### <<Positive Electrolyte and Negative Electrolyte>>

RF battery system 1 according to the present example reduces problems that may occur within battery cell 10 due to a pressure difference between positive electrolyte 6 and negative electrolyte 7 circulating within battery cell 10. To reduce such problems, in the present example, the kinematic viscosity P1 of positive electrolyte 6 and the kinematic viscosity P2 of negative electrolyte 7 are adjusted. In the following, the configuration of positive electrolyte 6 and negative electrolyte 7 will be described in detail. An electrolyte 5 in the below description collectively refers to positive electrolyte 6 and negative electrolyte 7.

Positive electrolyte 6 includes a positive electrode active material. Negative electrolyte 7 includes a negative electrode active material. Typically, the positive electrode active material and the negative electrode active material are metal ions the valence of which changes along with oxidation and reduction. The positive electrode active material is vanadium (V) ions, iron (Fe) ions, copper (Cu) ions, or manganese (Mn) ions, for example. The negative electrode active material is V ions, chromium (Cr) ions, titanium (Ti) ions, cobalt (Co) ions, Cu ions, or zinc (Zn) ions, for example. A specific example involves a vanadium-based electrolyte where both the positive electrolyte 6 and the negative electrolyte 7 include V ions. Another specific example involves a manganese-titanium-based electrolyte where positive electrolyte 6 includes Mn ions and negative electrolyte 7 includes Ti ions.

Electrolyte 5 of RF battery system 1 according to the present example is a vanadium-based electrolyte. The concentration of the positive electrode active material in positive electrolyte 6 and the concentration of the negative electrode active material in negative electrolyte 7 are selected, as appropriate, to be suitable for the battery performance required of RF battery system 1. In the vanadium-based electrolyte, the total concentration of vanadium ions as the positive electrode active material, more specifically, the total concentration of tetravalent vanadium ions and pentavalent vanadium ions is from 1.0 mol/liter to 3.0 mol/liter, for example. The total concentration of vanadium ions as the negative electrode active material, more specifically, the total concentration of divalent vanadium ions and trivalent vanadium ions is from 1.0 mol/liter to 3.0 mol/liter, for example. The lower limit to the concentration of each of the positive electrode active material and the negative electrode active material is a value that allows for ensuring a desired power output. Meanwhile, as described below, the positive electrode active material and the negative electrode active material cause an increase of the kinematic viscosity of electrolyte 5. When the kinematic viscosity of electrolyte 5 is too high, problems may occur during operation of RF battery system 1. Because of this, the upper limit to the concentration of each of the positive electrode active material and the negative electrode active material is a value at which the kinematic viscosity of electrolyte 5 does not become too high. The concentration of the vanadium ions as the positive electrode active material may be 1.5 mol/liter or more, or 1.6 mol/liter or more, or 1.7 mol/liter or more, for example. The concentration of the vanadium ions as the negative electrode active material may be 1.5 mol/liter or more, or 1.6 mol/liter or more, or 1.7 mol/liter or more, for example.

Electrolyte 5 of RF battery system 1 according to the above-mentioned another example is a Mn-Ti-based electrolyte. In this case, both the positive electrolyte 6 and the negative electrolyte 7 may include Mn ions and Ti ions. In positive electrolyte 6, Mn ions function as a positive electrode active material. In negative electrolyte 7, Ti ions function as a negative electrode active material. The standard oxidation-reduction potential of Mn ions is higher than the standard oxidation-reduction potential of other metal ions that are usable as a positive electrode active material. Therefore, a redox-flow battery system that includes Mn ions as a positive electrode active material and also includes Ti ions as a negative electrode active material has a high electromotive force. Mn is relatively inexpensive and readily available. Mn ions in positive electrolyte 6 sometimes become deposited as MnO₂. Although the mechanism is not known, Ti ions included in positive electrolyte 6 reduce deposition of Mn ions. Neither Ti ions included in positive electrolyte 6 nor Mn ions included in negative electrolyte 7 function as an active material. Positive electrolyte 6 and negative electrolyte 7 of this type have the same composition before initial charging. Therefore, it is not necessary to individually prepare positive electrolyte 6 and negative electrolyte 7.

The concentration of the positive electrode active material in positive electrolyte 6 and the concentration of the negative electrode active material in negative electrolyte 7 are selected as appropriate to be suitable for the battery performance required of RF battery system 1. In a Mn-Ti-based RF battery system, the concentration of the positive electrode active material, namely, the concentration of Mn ions is from 0.8 mol/liter to 1.2 mol/liter, for example. The concentration of the negative electrode active material, namely, the concentration of Ti ions is from 1.4 mol/liter to 1.9 mol/liter, for example. When the concentration of Mn ions and the concentration of Ti ions in the positive electrolyte do not exceed the upper limits of the above-mentioned ranges, respectively, the kinematic viscosity P1 of the positive electrolyte does not rise too high. When the concentration of Mn ions and the concentration of Ti ions in the negative electrolyte do not exceed the upper limits of the above-mentioned ranges, respectively, the kinematic viscosity P2 of the negative electrolyte does not rise too high. Therefore, a positive electrolyte having the concentration of Mn ions falling within the above-mentioned range and a negative electrolyte having the concentration of Ti ions falling within the above-mentioned range tend to have a ratio P1/P2 of their kinematic viscosity falling within the range of 0.70 to 0.97, or 1.05 to 1.30. Here, the lower limit to the concentration of each of the positive electrode active material and the negative electrode active material is a value that allows for ensuring a desired power output. Meanwhile, as described below, the positive electrode active material and the negative electrode active material cause an increase of the kinematic viscosity of electrolyte 5. When the kinematic viscosity of electrolyte 5 is too high, problems may occur during operation of RF battery system 1. Because of this, the upper limit to the concentration of each of the positive electrode active material and the negative electrode active material is a value at which the kinematic viscosity of electrolyte 5 does not become too high. The concentration of Mn ions may be from 0.9 mol/liter to 1.1 mol/liter, for example. The concentration of Ti ions may be from 1.45 mol/liter from to 1.8 mol/liter, for example.

In addition to Mn ions and Ti ions, electrolyte 5 may include one or more types of ions selected from a first group consisting of magnesium (Mg) ions, cadmium (Cd) ions, tin (Sn) ions, indium (In) ions, antimony (Sb) ions, molybdenum (Mo) ions, cerium (Ce) ions, lead (Pb) ions, bismuth (Bi) ions, iron (Fe) ions, and ammonium (NH₄) ions. The ions of the first group are different from the active material ions. When ions of the first group are included in electrolyte 5, aggregation of deposited MnO₂ is reduced. The ions of the first group may be used for making fine adjustments of the viscosity of electrolyte 5.

The total concentration of the ions of the first group is from 0.001 mol/liter to 1 mol/liter, for example. When the total concentration of the ions of the first group is 0.001 mol/liter or more, aggregation of deposited MnO₂ tends to be reduced. When the concentration of the ions of the first group is 1 mol/liter or less, the kinematic viscosity of electrolyte 5 tends not to rise high. Further, the total concentration of the ions of the first group may be from 0.01 mol/liter to 0.5 mol/liter.

Electrolyte 5 is an aqueous sulfuric acid (H₂SO₄) solution, an aqueous phosphoric acid (H₃PO₄) solution, and/or an aqueous nitric acid (HNO₃) solution, for example. Sulfuric acid, phosphoric acid, and nitric acid cause an increase of the concentration of hydrogen ions which play a part in battery reactions. The aqueous sulfuric acid solution may include phosphoric acid. Electrolyte 5 according to the present example is an aqueous sulfuric acid solution including phosphoric acid. The concentration of sulfuric acid in the aqueous sulfuric acid solution is from 1.0 mol/liter to 6.0 mol/liter, for example. The higher the concentration of sulfuric acid included in electrolyte 5 is, the higher the kinematic viscosity of electrolyte 5 becomes. The concentration of sulfuric acid may be from 2.0 mol/liter to 5.0 mol/liter, or may be from 3.0 mol/liter to 4.0 mol/liter. Because the concentration of sulfuric acid affects the kinematic viscosity, it is desirable herein to adjust the concentration of sulfuric acid to fall within the above-mentioned range. The concentration of phosphoric acid in the aqueous sulfuric acid solution is from 0.1 mol/liter to 1.0 mol/liter, for example. The concentration of phosphoric acid may be from 0.15 mol/liter to 0.5 mol/liter, or may be from 0.2 mol/liter to 0.5 mol/liter, or may be from 0.25 mol/liter to 0.3 mol/liter.

The concentration of ions of the elements included in electrolyte 5 is measured by inductively coupled plasma (ICP) atomic emission spectrometry, for example.

The kinematic viscosity P1 of positive electrolyte 6 may change depending on the SOC of positive electrolyte 6. For example, in a Mn-Ti-based RF battery system where positive electrolyte 6 includes Mn ions as the positive electrode active material, along with an increase of the SOC of positive electrolyte 6, the concentration of Mn³⁺ in positive electrolyte 6 becomes higher than the concentration of Mn²⁺. As the SOC increases, the kinematic viscosity P1 may increase. The kinematic viscosity P2 of negative electrolyte 7 may change depending on the SOC of negative electrolyte 7. In the case where negative electrolyte 7 includes Ti ions as the negative electrode active material, along with an increase of the SOC of negative electrolyte 7, the concentration of Ti³⁺ in negative electrolyte 7 becomes higher than the concentration of Ti⁴⁺. As the SOC increases, the kinematic viscosity P2 may increase. Unlike the example of a Mn-Ti-based RF battery system, as the SOC of electrolyte 5 increases, the kinematic viscosity of electrolyte 5 may decrease. In a V-based RF battery system according to the present example, the kinematic viscosity of electrolyte 5 that includes V ions may decrease as the SOC increases. The kinematic viscosity P1, P2 is measured with a commercially available viscometer.

When the difference between the kinematic viscosity P1 and the kinematic viscosity P2 is too large, there is a possibility that various problems can occur within battery cell 10. For example, when the kinematic viscosity P1 is higher than the kinematic viscosity P2, the pressure of positive electrolyte 6 may become higher than the pressure of negative electrolyte 7. In this case, there is a possibility that a load can be applied on membrane 101 by positive electrolyte 6 to damage membrane 101. In addition, positive electrolyte 6 can crush negative electrode 105 to reduce the flowability of negative electrolyte 7 in negative electrode 105. Furthermore, when there are pinholes in membrane 101, positive electrolyte 6 tends to flow through the pinholes to enter into negative electrode cell 103.

RF battery system 1 according to the present example is configured to operate in such a manner that the kinematic viscosity P1 and the kinematic viscosity P2 are different from each other. For example, RF battery system 1 may be configured to operate in such a manner that the ratio P1/P2 of the kinematic viscosity P1 to the kinematic viscosity P2 is from 0.70 to 0.97, or from 1.05 to 1.30. When the ratio P1/P2 falls within the above-mentioned range, the difference between the pressure of positive electrolyte 6 and the pressure of negative electrolyte 7 within battery cell 10 does not become too large. As a result, RF battery system 1 according to the present example is capable of reducing problems that can be caused by a pressure difference between positive electrolyte 6 and negative electrolyte 7.

When the ratio P1/P2 is close to 1, namely, when the difference between the kinematic viscosity P1 and the kinematic viscosity P2 is very small, diffusion at the contact interface between positive electrolyte 6 and negative electrolyte 7 tends to occur. As a result, when there are pinholes in membrane 101, positive electrolyte 6 and negative electrolyte 7 with a ratio P1/P2 close to 1 tend to become mixed with each other once they pass through the pinholes. On the other hand, in the case of positive electrolyte 6 and negative electrolyte 7 with a ratio P1/P2 being 0.97 or less or 1.05 or more, the mixing rate tends to be low even when they pass through the pinholes.

As described above, as the ratio P1/P2 becomes closer to 1 or farther from 1, problems are more likely to occur. Therefore, the ratio P1/P2 may be from 0.80 to 0.96, or from 1.10 to 1.29, or from 0.90 to 0.96, or from 1.20 to 1.28, for example.

The kinematic viscosity of electrolyte 5 rises depending on the concentration of the active material included in electrolyte 5, the concentration of sulfuric acid, and the like. Accordingly, to ensure the discharged capacity of RF battery system 1 to be a certain value or more, the kinematic viscosity of electrolyte 5 needs to be equal to or more than a certain value. For example, the kinematic viscosity P1 of positive electrolyte 6 is 0.70×10⁻² cm²/s or more, or 1.0×10⁻² cm²/s or more, or 1.2×10⁻² cm²/s or more, or 2.0×10⁻² cm²/s or more, or 6.5×10⁻² cm²/s or more. The kinematic viscosity P2 of negative electrolyte 7 is, for example, 0.75×10⁻² cm²/s or more, or 0.95×10⁻² cm²/s or more, or 1.2×10⁻² cm²/s or more, or 1.9×10⁻² cm²/s or more, or 5.5×10⁻² cm²/s or more.

As the kinematic viscosity of electrolyte 5 increases, pressure loss of electrolyte 5 increases. As the pressure loss increases, power consumption of pump 109, 113 for circulating the electrolyte increases. Accordingly, to ensure the pressure loss of electrolyte 5 not to exceed a certain value, the kinematic viscosity of electrolyte 5 needs to be equal to or less than a certain value. For example, the kinematic viscosity P1 of positive electrolyte 6 is 20×10⁻² cm²/s or less, or 18×10⁻² cm²/s or less, or 16×10⁻² cm²/s or less, or 9.7×10⁻² cm²/s or less, or 5.0×10⁻² cm²/s or less. The kinematic viscosity P2 of negative electrolyte 7 is, for example, 19×10⁻² cm²/s or less, or 17×10⁻² cm²/s or less, or 15×10⁻² cm²/s or less, or 9.2×10⁻² cm²/s or less, or 5.0×10⁻² cm²/s or less.

The range of the kinematic viscosity P1 may be from 1.0×10⁻² cm²/s to 20×10⁻² cm²/s, or from 2.0×10⁻² cm²/s to 18×10⁻² cm²/s, or from 6.5×10⁻² cm²/s to 9.7×10⁻² cm²/s, for example. As for a vanadium-based electrolyte, the range of the kinematic viscosity P1 may be from 0.70×10⁻² cm²/s to 5.0×10⁻² cm²/s, or from 1.0×10⁻² cm²/s to 5.0×10⁻² cm²/s, for example. The range of the kinematic viscosity P2 may be from 0.95×10⁻² cm²/s to 19×10⁻² cm²/s, or from 1.9×10⁻² cm²/s to 17×10⁻² cm²/s, or from 5.5×10⁻² cm²/s to 9.2×10⁻² cm²/s, for example. As for a vanadium-based electrolyte, the range of the kinematic viscosity P2 may be from 0.75×10⁻² cm²/s to 5.0×10⁻² cm²/s, or from 1.0×10⁻² cm²/s to 5.0×10⁻² cm²/s, for example.

From the viewpoints of inhibiting degradation of electrolyte 5, enhancing battery efficiency, and the like, RF battery system 1 is operated between the end-of-discharge voltage and the end-of-charge voltage. The end-of-discharge voltage is a voltage to stop discharging from RF battery system 1 to power system 9. The end-of-charge voltage is a voltage to stop charging from power system 9 to RF battery system 1. As long as RF battery system 1 according to the present example is operated between the end-of-discharge voltage and the end-of-charge voltage, the ratio P1/P2 in RF battery system 1 satisfies the range of 0.70 to 0.97, or 1.05 to 1.30. The end-of-discharge voltage and the end-of-charge voltage are determined to be suitable for the properties of electrolyte 5, such as the type and concentration of the active material.

The end-of-discharge voltage and the end-of-charge voltage are measured with the use of a monitor cell, for example. An example of the configuration of the monitor cell is the same as that of battery cell 10. The monitor cell may be one of battery cells 10 included in cell stack 2, or may be a battery cell 10 that is not in cell stack 2.

The end-of-discharge voltage and the end-of-charge voltage are determined in accordance with the charging molarity of the positive electrode active material in positive electrolyte 6 and the charging molarity of the negative electrode active material in negative electrolyte 7. The charging molarity is the molarity of active material ions that goes up during charging. In V-based RF battery system 1 according to the present example, the charging molarity of the positive electrode active material is the molarity of V⁵⁺ in positive electrolyte 6, and the charging molarity of the negative electrode active material is the molarity of V²⁺. In Ti-Mn-based RF battery system 1 according to the above-mentioned another example, the charging molarity of the positive electrode active material is the molarity of Mn³⁺ in positive electrolyte 6, and the charging molarity of the negative electrode active material is the molarity of Ti³⁺ in negative electrolyte 7.

The charging molarity of the active material can be converted into the SOC of electrolyte 5. Herein, the SOC of the positive electrolyte in V-based RF battery system 1 is the ratio of V⁵⁺ ions to the V ions included in positive electrolyte 6, namely, (Concentration of V⁵⁺)/(Total concentration of V⁵⁺ and V⁴⁺). The SOC of the negative electrolyte in V-based RF battery system 1 is the ratio of V²⁺ ions to the V ions included in negative electrolyte 7, namely, (Concentration of V²⁺)/(Total concentration of V²⁺ and V³⁺). The SOC of the positive electrolyte in Mn-Ti-based RF battery system 1 is the ratio of Mn³⁺ to the Mn ions included in positive electrolyte 6, namely, (Concentration of Mn³⁺)/(Total concentration of Mn³⁺ and Mn²⁺). The SOC of the negative electrolyte in Mn-Ti-based RF battery system 1 is the ratio of Ti³⁺ to the Ti ions included in negative electrolyte 7, namely, (Concentration of Ti³⁺)/(Total concentration of Ti³⁺ and Ti⁴⁺).

### [Examples]

### <Test Example I>

V-based RF battery systems 1 of Sample No. I-1 to Sample No. I-3 were produced. Positive electrolyte 6 and negative electrolyte 7 of these samples were V-based electrolytes. Sample No. I-1 to Sample No. I-3 are different in the concentration of V ions and the concentration of sulfuric acid. In the present example, as for each sample, a trial calculation was made for the ratio P1/P2 of the kinematic viscosity P1 of the positive electrolyte to the kinematic viscosity P2 of the negative electrolyte during charge-discharge operation at a liquid temperature of 10°C, 30°C, or 50°C and at an SOC within the range of 0% to 100%. In the trial calculation, from the concentration of V ions and the concentration of sulfuric acid, the viscosity and the density of the positive electrolyte and the negative electrolyte at each temperature were calculated, and the resulting viscosity was divided by the density to calculate the kinematic viscosity. Then, the kinematic viscosity P1 of the positive electrolyte was divided by the kinematic viscosity P2 of the negative electrolyte to calculate the ratio P1/P2.

### <<Sample No. I-1>>

The concentration of V ions and the concentration of sulfuric acid in electrolyte 5 of Sample No. I-1 are as follows.
·Concentration of V ions: 1.7 mol/liter
·Concentration of sulfuric acid: 4.3 mol/liter

Results of the test for Sample No. I-1 are shown in Table 1.

**[Table 1]**

| Sample No. I-1 (Concentration of V ions=1.7 mol/liter, Concentration of sulfuric acid=4.3 mol/liter) | | | | | |
|---|---|---|---|---|---|
| Test Example No. | Temperature (°C) | SOC (%) | Kinematic viscosity (×10⁻² cm²/s) | | Ratio P1/P2 |
| | | | Positive electrode P1 | Negative electrode P2 | |
| I-1-1 | 30 | 0 | 2.36 | 2.78 | 0.850 |
| I-1-2 | 30 | 50 | 2.12 | 2.48 | 0.857 |
| I-1-3 | 30 | 100 | 1.88 | 2.17 | 0.868 |
| I-1-4 | 50 | 0 | 1.48 | 1.69 | 0.875 |
| I-1-5 | 50 | 50 | 1.25 | 1.42 | 0.884 |
| I-1-6 | 50 | 100 | 1.02 | 1.14 | 0.899 |
| I-1-7 | 10 | 0 | 4.40 | 4.69 | 0.937 |
| I-1-8 | 10 | 50 | 3.89 | 4.43 | 0.877 |
| I-1-9 | 10 | 100 | 3.37 | 4.16 | 0.810 |

### <<Sample No. I-2>>

The concentration of V ions and the concentration of sulfuric acid in electrolyte 5 of Sample No. I-2 are as follows.
·Concentration of V ions: 1.3 mol/liter
·Concentration of sulfuric acid: 4.0 mol/liter

Results of the test for Sample No. I-2 are shown in Table 2.

**[Table 2]**

| Sample No. I-2 (Concentration of V ions=1.3 mol/liter, Concentration of sulfuric acid=4.0 mol/liter) | | | | | |
|---|---|---|---|---|---|
| Test Example No. | Temperature (°C) | SOC (%) | Kinematic viscosity (×10⁻² cm²/s) | | Ratio P1/P2 |
| | | | Positive electrode P1 | Negative electrode P2 | |
| I-2-1 | 30 | 0 | 1.88 | 2.11 | 0.893 |
| I-2-2 | 30 | 50 | 1.63 | 1.80 | 0.909 |
| I-2-3 | 30 | 100 | 1.38 | 1.48 | 0.934 |
| I-2-4 | 50 | 0 | 1.12 | 1.34 | 0.834 |
| I-2-5 | 50 | 50 | 1.00 | 1.15 | 0.869 |
| I-2-6 | 50 | 100 | 0.88 | 0.96 | 0.921 |
| I-2-7 | 10 | 0 | 3.43 | 3.85 | 0.891 |
| I-2-8 | 10 | 50 | 3.18 | 3.53 | 0.902 |
| I-2-9 | 10 | 100 | 2.94 | 3.20 | 0.917 |

### <<Sample No. I-3>>

The concentration of V ions and the concentration of sulfuric acid in electrolyte 5 of Sample No. I-3 are as follows.
·Concentration of V ions: 1.0 mol/liter
·Concentration of sulfuric acid: 4.0 mol/liter

Results of the test for Sample No. I-3 are shown in Table 3.

**[Table 3]**

| Sample No. I-3 (Concentration of V ions=1.0 mol/liter, Concentration of sulfuric acid=4.0 mol/liter) | | | | | |
|---|---|---|---|---|---|
| Test Example No. | Temperature (°C) | SOC (%) | Kinematic viscosity (×10⁻² cm²/s) | | Ratio P1/P2 |
| | | | Positive electrode P1 | Negative electrode P2 | |
| I-3-1 | 30 | 0 | 1.66 | 1.78 | 0.929 |
| I-3-2 | 30 | 50 | 1.42 | 1.55 | 0.918 |
| I-3-3 | 30 | 100 | 1.19 | 1.31 | 0.904 |
| I-3-4 | 50 | 0 | 1.09 | 1.16 | 0.940 |
| I-3-5 | 50 | 50 | 0.94 | 1.01 | 0.932 |
| I-3-6 | 50 | 100 | 0.80 | 0.87 | 0.922 |
| I-3-7 | 10 | 0 | 2.85 | 3.13 | 0.912 |
| I-3-8 | 10 | 50 | 2.62 | 3.01 | 0.871 |
| I-3-9 | 10 | 100 | 2.40 | 2.90 | 0.827 |

Referring to Table 1 to Table 3, in all the RF battery systems with the above-mentioned three compositions of V-based electrolyte, during charge-discharge operation at a liquid temperature of 10°C, 30°C, or 50°C and at an SOC within the range of 0% to 100%, the ratio P1/P2 of the kinematic viscosity P1 of the positive electrolyte to the kinematic viscosity P2 of the negative electrolyte is from 0.70 to 0.97 at all times during operation. From these results, it is presumed that when the end-of-discharge SOC and the end-of-charge SOC are set to fall within the range of 0% to 100% and the liquid temperature is set to fall within the range of 10°C to 50°C, the RF battery system in operation is capable of reliably maintaining the range of 0.70 to 0.97.

Also referring to Fig. 1 and Fig. 2, in the above-mentioned V-based electrolyte RF battery system, even when pinholes are formed in membrane 101 of battery cell 10, diffusion of electrolyte 5 through the pinholes tends to be reduced, and, thereby, it is expected that the rate at which positive electrolyte 6 and negative electrolyte 7 are mixed with each other can be reduced.

### <Test Example II-1>

As other examples, RF battery systems 1 that included electrolytes 5 of Sample No. II-1 to Sample No. II-3, respectively, were produced. Positive electrolyte 6 and negative electrolyte 7 of these samples are Mn-Ti-based electrolytes. Before initial charging, the composition of positive electrolyte 6 is the same as the composition of negative electrolyte 7. After test operation of RF battery system 1 of each sample which consisted of multiple sets of charging and discharging, RF battery system 1 was discharged until the end-of-discharge voltage was reached, and the kinematic viscosity of electrolyte 5 at the end-of-discharge voltage was measured. Then, RF battery system 1 of each sample was charged until the end-of-charge voltage was reached, and the kinematic viscosity of electrolyte 5 at the end-of-charge voltage was measured. The specifications of electrolyte 5 of each sample are described below.

### <<Sample No. II-1>>

The concentration of Mn ions, the concentration of Ti ions, and the concentration of sulfuric acid in electrolyte 5 of Sample No. II-1 are as follows. It should be noted that electrolyte 5 of the samples including Sample No. 1 includes phosphoric acid in a concentration selected from the range of 0.15 mol/liter to 0.30 mol/liter.
·Concentration of Mn ions: 1.1 mol/liter
·Concentration of Ti ions: 1.45 mol/liter
·Concentration of sulfuric acid: 5.35 mol/liter

The end-of-discharge voltage is determined in advance based on the concentration of Mn ions and the concentration of Ti ions included in electrolyte 5. That is, the charging molarity of the positive electrode active material and the charging molarity of the negative electrode active material at the end-of-discharge voltage are also determined in advance. Similarly, the SOC of positive electrolyte 6 and the SOC of negative electrolyte 7 are also determined in advance. The charging molarity and the SOC at the end-of-discharge voltage are as follows.
·Charging molarity of positive electrode active material at end-of-discharge voltage, namely, concentration of Mn³⁺ in positive electrolyte 6: 0.35 mol/liter
·SOC of positive electrolyte 6 at end-of-discharge voltage, namely, 100×(Concentration of Mn³⁺)/(Concentration of Mn ions): About 32%
·Charging molarity of negative electrode active material at end-of-discharge voltage, namely, concentration of Ti³⁺ in negative electrolyte 7: 0.3 mol/liter
·SOC of negative electrolyte 7 at end-of-discharge voltage, namely, 100×(Concentration of Ti³⁺)/(Concentration of Ti ions): About 21%

The end-of-charge voltage is determined in advance based on the concentration of Mn ions and the concentration of Ti ions included in electrolyte 5. That is, the charging molarity and the SOC are also determined in advance. The charging molarity and the SOC are as follows.
·Charging molarity of positive electrolyte 6 at end-of-charge voltage: 0.9 mol/liter
·SOC of positive electrolyte 6 at end-of-charge voltage: About 82%
·Charging molarity of negative electrolyte 7 at end-of-charge voltage: 1.0 mol/liter
·SOC of negative electrolyte 7 at end-of-charge voltage: About 69%

### <<Sample No. II-2>>

The specifications of electrolyte 5 of Sample No. II-2 are as follows.
·Concentration of Mn ions in electrolyte 5: 1.1 mol/liter
·Concentration of Ti ions in electrolyte 5: 1.6 mol/liter
·Concentration of sulfuric acid in electrolyte 5: 5.5 mol/liter
·Charging molarity of positive electrode active material at end-of-discharge voltage: 0.35 mol/liter
·SOC of positive electrolyte 6 at end-of-discharge voltage: About 32%
·Charging molarity of negative electrode active material at end-of-discharge voltage: 0.3 mol/liter
·SOC of negative electrolyte 7 at end-of-discharge voltage: About 19%
·Charging molarity of positive electrode active material at end-of-charge voltage: 0.9 mol/liter
·SOC of positive electrolyte 6 at end-of-charge voltage: About 82%
·Charging molarity of positive electrode active material at end-of-charge voltage: 1.0 mol/liter
·SOC of negative electrolyte 7 at end-of-charge voltage: About 63%

### <<Sample No. II-3>>

The specifications of electrolyte 5 of Sample No. II-3 are as follows.
·Concentration of Mn ions in electrolyte 5: 0.9 mol/liter
·Concentration of Ti ions in electrolyte 5: 1.8 mol/liter
·Concentration of sulfuric acid in electrolyte 5: 5.3 mol/liter
·Charging molarity of positive electrode active material at end-of-discharge voltage: 0.35 mol/liter
·SOC of positive electrolyte 6 at end-of-discharge voltage: About 39%
·Charging molarity of negative electrode active material at end-of-discharge voltage: 0.3 mol/liter
·SOC of negative electrolyte 7 at end-of-discharge voltage: About 17%
·Charging molarity of positive electrode active material at end-of-charge voltage: 1.0 mol/liter
·SOC of positive electrolyte 6 at end-of-charge voltage: About 100%
·Charging molarity of negative electrode active material at end-of-charge voltage: 1.5 mol/liter
·SOC of negative electrolyte 7 at end-of-charge voltage: About 83%

It should be noted that two Mn²⁺ ions become Mn²⁺ and MnO₂ by a disproportionated reaction. By this disproportionated reaction, the charging molarity of positive electrolyte 6 may become higher than the concentration of Mn ions.

RF battery system 1 of each sample was discharged until the end-of-discharge voltage was reached. The voltage of RF battery system 1 was measured with the use of a monitor cell. From RF battery system 1 that was discharged to the end-of-discharge voltage, positive electrolyte 6 and negative electrolyte 7 were sampled. The kinematic viscosity P1 of positive electrolyte 6 thus sampled and the kinematic viscosity P2 of negative electrolyte 7 are measured in accordance with JIS Z 8803. In this test, the kinematic viscosity P1, P2 was measured with a Cannon Fenske viscometer. The unit of the kinematic viscosity P1, P2 measured with the viscometer was cSt (centistokes). 1 cSt is 1×10⁻² cm²/s. For each sample, the charging molarity and the kinematic viscosity P1, P2 at the end-of-discharge voltage, as well as the charging molarity and the kinematic viscosity P1, P2 at the end-of-charge voltage are shown in Table 1. Moreover, in Table 4, the value of the ratio P1/P2 is shown.

**[Table 4]**

| Sample No. | | Positive electrolyte | | Negative electrolyte | | Ratio P1/P2 |
|---|---|---|---|---|---|---|
| | | Charging molarity (mol/liter) | Kinematic viscosity P1 (×10⁻² cm²/s) | Charging molarity (mol/liter) | Kinematic viscosity P2 (×10⁻² cm²/s) | |
| II-1 | End-of-discharge voltage | 0.35 | 6.8 | 0.3 | 5.6 | 1.21 |
| | End-of-charge voltage | 0.9 | 8.1 | 1.0 | 6.3 | 1.28 |
| II-2 | End-of-discharge voltage | 0.35 | 8.7 | 0.3 | 6.9 | 1.26 |
| | End-of-charge voltage | 0.9 | 9.6 | 1.0 | 7.4 | 1.29 |
| II-3 | End-of-discharge voltage | 0.35 | 7.9 | 0.3 | 8.5 | 0.92 |
| | End-of-charge voltage | 1.0 | 8.7 | 1.5 | 9.1 | 0.96 |

Referring to Table 4, both the ratio P1/P2 of Sample No. II-1 and the ratio P1/P2 of Sample No. II-2 were from 1.05 to 1.30 at both the end-of-discharge voltage and the end-of-charge voltage. RF battery system 1 is operated at between the end-of-discharge voltage and the end-of-charge voltage. Therefore, in RF battery system 1, the ratio P1/P2 of Sample No. II-1 and Sample No. II-2 satisfies the range of 1.05 to 1.30 at all times during operation.

P1/P2 of Sample No. II-3 was from 0.70 to 0.97 at both the end-of-discharge voltage and the end-of-charge voltage. Therefore, in RF battery system 1, the ratio P1/P2 of Sample No. 3 satisfies the range of 0.70 to 0.97 at all times during operation.

In RF battery system 1 of Sample No. II-1 to Sample No. II-3, even when pinholes are formed in membrane 101 of battery cell 10, diffusion of electrolyte 5 through the pinholes tends to be reduced. Thereby, the rate at which positive electrolyte 6 and negative electrolyte 7 are mixed with each other can be reduced.

### <Test Example II-2>

In Test Example II-2, RF battery systems 1 of Sample No. II-1 and Sample No. II-2 were charged until a state of overcharge was reached. The charging molarity, the kinematic viscosity P1, P2, and the ratio P1/P2 of Sample No. II-1 and Sample No. II-2 at a state of overcharge are shown in Table 5.

**[Table 5]**

| Sample No. | Positive electrolyte | | Negative electrolyte | | Ratio P1/P2 |
|---|---|---|---|---|---|
| | Charging molarity (mol/liter) | Kinematic viscosity P1 (×10⁻² cm²/s) | Charging molarity (mol/liter) | Kinematic viscosity P2 (×10⁻² cm²/s) | |
| II-1 | 1.05 | 8.5 | 1.2 | 6.4 | 1.31 |
| II-2 | 1.05 | 9.85 | 1.2 | 7.5 | 1.31 |

As for Sample No. II-1, the SOC of positive electrolyte 6 was 100×1.05/1.1=about 95%, and the SOC of negative electrolyte 7 was 100×1.2/1.45=about 83%. As for Sample No. II-2, the SOC of positive electrolyte 6 was 100×1.05/1.1=about 95%, and the SOC of negative electrolyte 7 was 100×1.2/1.6=about 75%. For both Sample No. II-1 and Sample No. II-2, the ratio P1/P2 was 1.31. It is conceivable that with the ratio P1/P2 exceeding 1.3, damage tends not to accumulate in membrane 101. When pinholes are formed in membrane 101, the pressure difference between electrolytes 5 increases, and, thereby, the high-pressure electrolyte 5 tends to flow through the pinholes to enter into the low-pressure electrolyte 5.

### <Test Example II-3>

In Test Example II-3, RF battery systems 1 of Sample No. II-1 and Sample No. II-2 were discharged until a state of overdischarge was reached. At a state of overdischarge, the charging molarity, the kinematic viscosity P1, P2, and the ratio P1/P2 of Sample No. II-1 and Sample No. II-2 are shown in Table 6.

**[Table 6]**

| Sample No. | Positive electrolyte | | Negative electrolyte | | Ratio P1/P2 |
|---|---|---|---|---|---|
| | Charging molarity (mol/liter) | Kinematic viscosity P1 (×10⁻² cm²/s) | Charging molarity (mol/liter) | Kinematic viscosity P2 (×10⁻² cm²/s) | |
| II-1 | 0.08 | 6.4 | 0.07 | 6.2 | 1.04 |
| II-2 | 0.1 | 6.3 | 0.05 | 6.1 | 1.04 |

As for Sample No. II-1, the SOC of positive electrolyte 6 was 100×0.08/1.1=about 7%, and the SOC of negative electrolyte 7 was 100×0.07/1.45=about 5%. As for Sample No. II-2, the SOC of positive electrolyte 6 was 100×0.1/1.1=about 9%, and the SOC of negative electrolyte 7 was 100×0.05/1.6=about 3%. For both Sample No. 1 and Sample No. 2, the ratio P1/P2 was 1.04. It is conceivable that with the ratio P1/P2 exceeding 0.97 and below 1.05, damage tends not to accumulate in membrane 101. However, when pinholes are formed in membrane 101, surface tension tends not to act on parts of the pinholes where positive electrolyte 6 and negative electrolyte 7 are in contact with each other, and positive electrolyte 6 and negative electrolyte 7 tend to be mixed with each other.

### REFERENCE SIGNS LIST

1 redox-flow battery system, 10 battery cell, 101 membrane, 102 positive electrode cell, 103 negative electrode cell, 104 positive electrode, 105 negative electrode, 11 first circulation mechanism, 106 tank, 107 first pipe, 108 second pipe, 109 pump, 12 second circulation mechanism, 110 tank, 111 first pipe, 112 second pipe, 113 pump, 2 cell stack, 20 supply/drainage plate, 4 cell frame, 41 bipolar plate, 42 frame member, 5 electrolyte, 6 positive electrolyte, 7 negative electrolyte, 8 electrode converter, 9 power system, 90 electric power generating unit, 91 transformer facility, 92 load.

## Claims

1. A redox-flow battery system comprising:
a battery cell;
a positive electrolyte; and
a negative electrolyte, wherein
during operation, a kinematic viscosity P1 of the positive electrolyte is different from a kinematic viscosity P2 of the negative electrolyte.

2. The redox-flow battery system according to claim 1, wherein a ratio P1/P2 of the kinematic viscosity P1 to the kinematic viscosity P2 is from 0.70 to 0.97, or from 1.05 to 1.30.

3. The redox-flow battery system according to claim 1 or 2, wherein
the kinematic viscosity P1 is from 0.70×10⁻² cm²/s to 20×10⁻² cm²/s, and
the kinematic viscosity P2 is from 0.75×10⁻² cm²/s to 19×10⁻² cm²/s.

4. The redox-flow battery system according to any one of claims 1 to 3, wherein a positive electrode active material included in the positive electrolyte and a negative electrode active material included in the negative electrolyte are vanadium ions.

5. The redox-flow battery system according to claim 4, wherein a concentration of the vanadium ions in each of the positive electrolyte and the negative electrolyte is from 1.0 mol/liter to 3.0 mol/liter.

6. The redox-flow battery system according to any one of claims 1 to 5, wherein
each of the positive electrolyte and the negative electrolyte is an aqueous sulfuric acid solution, and
the aqueous sulfuric acid solution has a concentration of sulfuric acid from 1.0 mol/liter to 6.0 mol/liter.
